# EUROPEAN PATENT APPLICATION

(11) **EP 2 993 564 A1**
(43) Date of publication of application: **09.03.2016**
(21) Application number: 15183547.7
(22) Date of filing: 02.09.2015
(51) Int. Cl.: G06F 3/041, G06F 1/16, H04M 1/02

(54) **DISPLAY DEVICE**

(30) Priority: 02.09.2014 KR 20140116056
(71) Applicant: Samsung Electronics Co., Ltd., Gyeonggi-do 16677 (KR)
(72) Inventor: Jeong, Young-Tae, 16677 Gyeonggi-do (KR); Choi, Hyun-Suk, 16677 Gyeonggi-do (KR); Kim, Min-Soo, 16677 Gyeonggi-do (KR); Park, Dong-Myeong, 16677 Gyeonggi-do (KR); Park, Jin-Woo, 16677 Gyeonggi-do (KR); Sim, Young-Bae, 16677 Gyeonggi-do (KR)
(74) Representative: Nederlandsch Octrooibureau

(57) **Abstract**

A display device is provided. The display device includes a screen display unit, a first nontransparent layer, and a second nontransparent layer. The screen display unit includes a first screen region and a second screen region of which at least a portion is curved from the first screen region. The first nontransparent layer is disposed in at least one side of border portions of the screen display unit. The second nontransparent layer is disposed in at least one side of border portions of the second screen region and is separated from at least a portion of the first nontransparent layer in a direction perpendicular to the first nontransparent layer.

## Description

### TECHNICAL FIELD

The present disclosure relates to a display device.

### BACKGROUND

A display device is provided in an electronic device. As the display device, a touch screen device in which an input detection unit such as a touch panel is incorporated with a display unit such as a liquid crystal display has been used. In the touch panel, an input is implemented by detecting a contact, etc., at an area displayed on a screen without using a mechanical key pad. In addition, as recent display devices support proximity touch features such as a hovering, or an air view (also called an air gesture), convenience according to use of the display devices has been increased.

A simple look at the structure of the display device, as described above, reveals that the display device includes the touch panel detecting a touch and a display panel exposing a screen. The display device has a structure in which the touch panel and the display device are laminated.

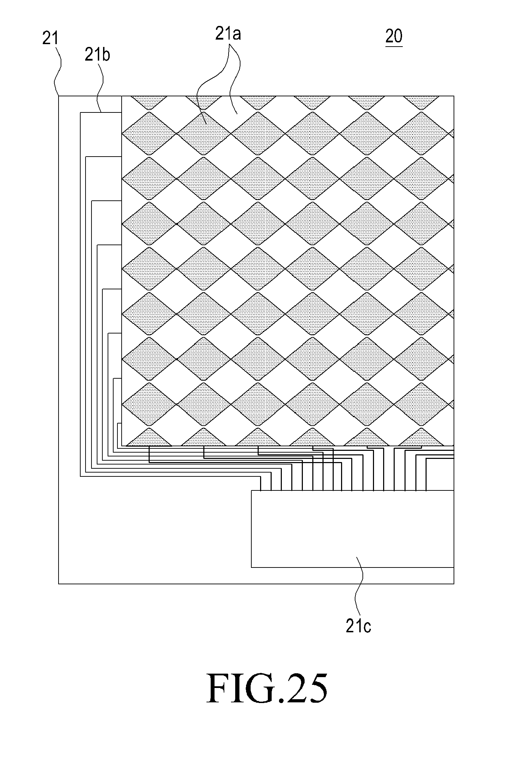

FIG. 25 is a view schematically illustrating a touch panel of a general display device according to the related art.

Referring to FIG. 25, for example, the touch panel 20 may include a transparent circuit substrate 21 which is touchable by laminating a transmit (Tx) pattern and a receive (Rx) pattern (e.g., an Indium tin oxide (ITO) pattern) on the transparent circuit substrate 21. A Flexible Printed Circuit Board (FPCB) is embodied in a portion of an electrode layer 21b, a circuit substrate unit 21c receives a signal value generated in the electrode layer 21b and transfers the same to a touch integrated circuit (IC). A transparent electrode 21a is disposed in a screen region of the transparent substrate 21. A signal transferring line and the circuit substrate unit 21c are disposed in the border portions of the screen region, i.e., borders of the transparent substrate 21. The transparent circuit substrate 21 may be laminated on a display panel such as the Liquid Crystal Display (LCD) to form a display device.

In the display device, a non-transparent layer is disposed in borders of the transparent substrate (hereinafter, referred to as a 'bezel region') so that connection members such as the signal transferring lines or the circuit substrate unit are not exposed.

As the recent display devices have input and output features, preference may be improved by making the display devices to be luxurious or creative in design, or by a structure with a good portability or grip.

Sizes of the recent display devices may be increased by minimizing the bezel region while having a more luxurious design, or a flexible display device or a convex (or concave) display device may be implemented.

Lately, the periphery of the display devices is curved so that a screen region thereof extends to the side portion to be used. As the screen region is curved to be disposed to the side portion, the screen region may extend to be used, or an additional screen may be employed in the side portion, or the display device may thereby incorporate a luxury design feature.

The above information is presented as background information only to assist with an understanding of the present disclosure. No determination has been made, and no assertion is made, as to whether any of the above might be applicable as prior art with regard to the present disclosure.

### SUMMARY

Aspects of the present disclosure are to address at least the above-mentioned problems and/or disadvantages and to provide at least the advantages described below.

When a display device is curved for a screen region thereof to extend to the side, line end regions or an inside structure of laminated panels which are covered by a non-transparent layer may be visualized, according to a view angle of the curved screen region.

Further, the laminated panels (e.g., a window cover, a touch panel, a display panel, a polarization panel, a digitizer panel) in the display device may have different curved degrees from each other, according to a material of which they are made. That is, a tensile rate generated when the display device is curved may vary according to a material, a location, etc., of the laminated panels. Thus, if the side of the display device, in which panels having same lengths are laminated, is curved, end locations of the respective panels may be short or long to have different end lengths from each other, according to a curved shape, a material, a lamination location, etc., of each panel, and thus, the end portions of the panels may be formed with a difference in level. In the case in which the respective panels have different lengths from each other to be formed with the difference in level, when a shock is applied to the end of the display device, an impact of the shock may be concentrated onto a panel which relatively further protrudes. The panel on which the impact of shock is concentrated may more easily become detached. Further, due to the difference in level generated between panels, impurity (e.g., water) may easily enter between the end portions of the respective panels. For example, if the impurity (e.g., water) may easily enter due to the difference in level generated between the end portions of the display panel and the touch panel, a side detachment may occur, the display device may malfunction or may not work, or may result in performance degradation of the display device.

Further, when the display device is curved, restoration elasticity may be generated differently depending on each laminated panel. Thus, in a case of a panel including a material with high restoration elasticity, a curved region may be detached due to the high restoration elasticity at the curved region, and thus, a defective rate of the display device may be increased.

Further, in a case where the screen region of the display device is curved to extend to at least one side thereof, a curvature due to being curved may be generated in at least one border of the panels. Thus, in a coupling process for coupling one panel with another panel, for example, when a panel such as a digitizer panel is coupled below the display panel in which the touch panel is included, the panels may be coupled through a lamination process. When the panels are disposed in a plane, the panels can be laminated with constant pressure and temperature to be coupled. However, as described above, when the panels of the display device including a flat first screen region and a curved second screen region are laminated, if they are laminated with constant pressure and temperature, the first screen region may not be damaged although the constant pressure and temperature are applied, but if the same pressure as the first screen region is applied in the curved second screen region, the panels of the second screen region curved from the first screen region may be damaged due to the applied pressure.

In addition, if the first screen region and the second screen region are laminated by applying different pressure values, the first and second screen regions may not be coupled uniformly, and thus, the same coupling force between the panels may not be kept and a detachment in the curved second screen region may be generated.

In accordance with an aspect of the present disclosure, a display device is provided. The device includes a restricted internal visibility due to a view angle generated when the screen region of the display device is curved.

In accordance with an aspect of the present disclosure, a display device is provided. The device includes a sealed difference in level occurring at ends of laminated panels due to the curved display device, limiting an impact that may occur from concentrating on a panel relatively protruding due to the generated difference in level, preventing an impurity from entering into a gap between the panels, and restricting secondary issues due to the impurity, for example, detachment or malfunction.

In accordance with an aspect of the present disclosure, a display device is provided. The device includes a flat screen region and a curved screen region having similar coupling forces to each other when border portions of at least one of screen regions of the display device is curved and the panels are laminated to be coupled.

In accordance with an aspect of the present disclosure, a display device is provided. The device includes preventing a detachment of panels in a curved second screen region generated when border portions of at least one of screen regions of the display device is curved.

In accordance with an aspect of the present disclosure, a display device is provided. The device includes a screen display unit including a first screen region and a second screen region of which at least a portion is curved from the first screen region, a first nontransparent layer disposed in at least one side of the border portions of the screen display unit, and a second nontransparent layer disposed in at least one side of the border portions of the second screen region and separated from at least a portion of the first nontransparent layer in a direction perpendicular to the first nontransparent layer.

A display device according to an embodiment of the present disclosure can prevent the internal visualization of the display device based on a simple structure, while the border portions of at least one of screen regions of the display device is curved and a view angle is generated, by doubly providing non-transparent layers in ends of curved screen regions to cover upper regions of connection members.

In addition, since the sealing member on the ends of the curved panels of the display device is disposed, a difference in level of the end portion of the panels can be covered and a gap between the panels can be sealed, the display device can restrict an impact from concentrating on a panel relatively protruding due to the generated difference in level, prevent the impurity from entering into a gap between the panels, and restrict secondary issues due to the impurity inflow, for example, detachment or malfunction.

In addition, when the panels of the display device are laminated, the first region and the second region can have similar coupling forces to each other by applying different pressure and temperature values to the first and second regions from each other, and thus, an adhesive strength between the panels can avoid being weakened and the panel detachment at a border portion between the first region and the second region can be prevented.

In addition, by forming a conductive sheet, which is attached below a panel (e.g., a digitizer panel) having a high restoring force among the panels disposed in the first and second regions, using different materials from each other according to lamination locations, a restoring force of the panels, including a slit unit in the second region, or by differentiating coupling members disposed between the conductive sheet and the digitized panel, the digitized panel attached on the conductive sheet can be prevented from being detached at a border portion between the first region and the second region.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIG. 1 is a view illustrating an electronic device 100 in a network environment 10 according to an embodiment of the present disclosure;
FIG. 2 is a block diagram of an electronic device 200 according to an embodiment of the present disclosure;
FIGS. 3A and 3B are views illustrating a display device according an embodiment of the present disclosure;
FIG. 4 is a view schematically illustrating a first screen region and a non-screen region around the first screen region in a display device according to an embodiment of the present disclosure;
FIG. 5 is a view schematically illustrating a second screen region and a non-screen region around the second screen region in a display device according to an embodiment of the present disclosure;
FIG. 6 is a view schematically illustrating a touch panel of a display device according to an embodiment of the present disclosure;
FIG. 7 is a view illustrating that a second non-transparent layer is disposed in one end of a reinforcing member and mounted in a visible region in a display device according to an embodiment of the present disclosure;
FIG. 8 is a view illustrating that a second non-transparent layer is disposed in one end of a touch panel and mounted in a visible region and an invisible region in a display device according to an embodiment of the present disclosure;
FIG. 9 is a view illustrating that a second non-transparent layer is disposed in one end of a touch panel and mounted in a visible region in a display device according to an embodiment of the present disclosure;
FIGS. 10A and 10B are views illustrating a case in which a second panel member is laminated on a display unit in a display device according to an embodiment of the present disclosure;
FIG. 11 is a view schematically illustrating a first embodiment of a detachment limit module in a display device according to an embodiment of the present disclosure;
FIGS. 12A, 12B, and 12C are views schematically illustrating a display unit including the detachment limit module according to the first embodiment in a display device according to an embodiment of the present disclosure;
FIGS. 13A and 13B are views schematically illustrating a second embodiment of a detachment limit module in a display device according to an embodiment of the present disclosure;
FIG. 14 is a view schematically illustrating a display unit including the detachment limit module according to the second embodiment in a display device according to an embodiment of the present disclosure;
FIGS. 15A and 15B are views schematically illustrating a third embodiment of a detachment limit module in a display device according to an embodiment of the present disclosure;
FIG. 16 is a view schematically illustrating a display unit including the detachment limit module according to the third embodiment in a display device according to an embodiment of the present disclosure;
FIG. 17 is a view schematically illustrating a fourth embodiment of a detachment limit module in a display device according to an embodiment of the present disclosure;
FIG. 18 is a view schematically illustrating a display unit including the detachment limit module according to the fourth embodiment in a display device according to an embodiment of the present disclosure;
FIG. 19 is a view schematically illustrating a display unit including a detachment limit module according to a fifth embodiment in a display device according to an embodiment of the present disclosure;
FIG. 20 is a view schematically illustrating a lamination process in a display device according to an embodiment of the present disclosure;
FIG. 21 is a flowchart of a lamination process in a display device according to an embodiment of the present disclosure;
FIG. 22 is a view illustrating a cross-section of laminated panels in a display device according to an embodiment of the present disclosure;
FIG. 23 is a view illustrating a case in which a sealing member is disposed in end portions end portions of panels in a display device according to an embodiment of the present disclosure;
FIG. 24 is a view illustrating a case in which a display unit is coupled to a display bracket in a display device according to an embodiment of the present disclosure; and
FIG. 25 is a view illustrating a general touch panel according to the related art.

Throughout the drawings, like reference numerals will be understood to refer to like parts, components, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from scope of and spirit the present disclosure. In addition, descriptions of well-known functions and constructions may be omitted for clarity and conciseness

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

It will be understood that, although the first, second, etc. may be used herein to describe various elements, these elements should not be limited by these terms. These terms are only used to distinguish one element from another. For example, a first element could be termed as a second element, and, similarly, a second element could be termed as a first element, without departing from the scope of the present disclosure. As used herein, the term "and/or" includes any and all combinations of one or more of the associated listed items.

Further, relative terms described such as 'front', 'rear', 'upper', 'lower', etc. with reference to drawings may be ordinal numbers such as 'first', 'second', etc. An order of the ordinal numbers such as 'first', 'second', etc. is defined according to a described order or in an arbitrary manner, but may be changed if necessary.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, components, or combinations thereof but do not preclude the presence or addition of one or more other features, integers, steps, operations, elements, components, and/or combinations thereof. Further, 'B is located in circumference of A' described in the present disclosure may be understood to include a case where B is located in border portions or edge, a case where B is directly located on A, and a case where another layer is located between one surface of the circumference of A and B. Further, it may be understood to include not only a case where B is located in all surfaces of the circumference of A, but also at least one surface thereof.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein. It should not be interpreted to exclude embodiments of the present disclosure while it is a terminology defined in this document according to circumstances.

An electronic device in the present disclosure may be various devices including a display device The electronic device may be referred to as a terminal, a portable terminal, a mobile terminal, a communication terminal, a portable communication terminal, a portable mobile terminal, a display device, etc.

For example, the electronic device may be a smart phone, a navigation device, a game console, a television, a head unit for a vehicle, a notebook computer, a laptop computer, a tablet computer, a personal media player (PMP), a personal digital assistant (PDA), or the like. The electronic device may be implemented as a portable communication device of a pocket size having a wireless communication feature. Also, the electronic device may be a flexible device or a flexible display device.

The electronic device may perform a process through a communication with an external electronic device such as a server, etc., or an interoperation with the external electronic device. For example, the electronic device may transfer an image taken by a camera and/or location information detected by a sensing unit to a server via a network. The network is not limited thereto, but the network may be a mobile or cellular communication network, a local area network (LAN), a wireless local area network (WLAN), a wide area network (WAN), an Internet, a small area network (SAN), or the like.

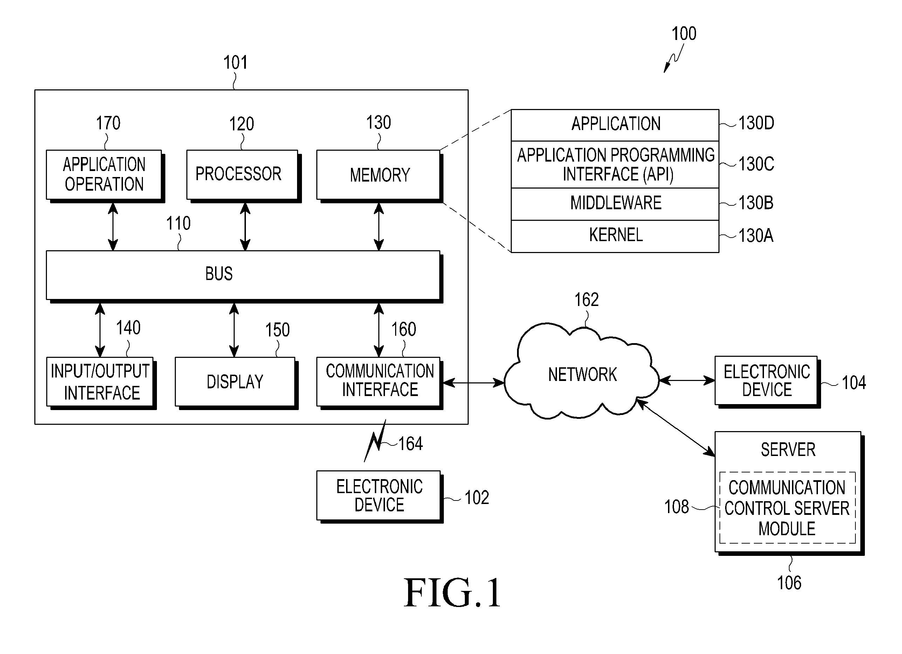

FIG. 1 is a view illustrating an electronic device 101 in a network environment 100 according to an embodiment of the present disclosure.

Referring to FIG. 1, the electronic device 101 may include a bus 110, a processor 120, a memory 130, an input/output interface 140, a display 150, and a communication interface 160. In an embodiment, the electronic device 100 may include an application operation module 170.

The bus 110 may be a circuit that connects the aforementioned elements and transfers communication signals (e.g., a control message and/or data) among the aforementioned elements.

The processor 120 may include at least one of (not shown) a Central Processing Unit (CPU), an Application Processor (AP), and a Communication Processor (CP). For example, the processor 120 may decode a command received from the aforementioned elements (e.g., the memory 130, the input/output interface 140, the display 150, the communication interface 160, the application operation module 170, or the like) and may perform an operation or a data processing according to the decoded command.

The memory 130 may include a volatile memory and/or a non-volatile memory. The memory 130 may store a command or data which is received or generated from the processor 120 or other elements (e.g., the input/output interface 140, the display 150, the communication interface 160, the application operation module 170, or the like). For example, the memory 130 may include a kernel 130A, a middleware 130B, an Application Programming Interface (API) 130C, or an application 130D. At least a portion of the kernel 130A, the middle-ware 130B, or the API 130C may be referred to as an Operating System (OS). Each of the program modules described above may be formed by a software, a firmware, a hardware, and/or a combination of at least two thereof.

For example, the kernel 130A may control or manage system resources (e.g., the bus 110, the processor 120, or the memory 130) used to execute operations or functions implemented in the rest of the program modules, for example, the middleware 130B, the API 130C or the application 130D. Further, the kernel 130A may provide an interface that can access to respective elements of the electronic device 100 to control or manage the elements.

The middleware 130B may act as a go-between for API 130C or the application 130D to communicate with the kernel 130A and exchange data. Further, the middleware 130B may perform control (e.g., scheduling or load balancing) on a work request received from the application 130D by, for example, assigning a priority for use of system resources (e.g., the bus 110, the processor 120, the memory, etc.) of the electronic device to at least one of the applications 130D.

The API 130C may be an interface through which the application 130D controls features provided in the kernel 130A or the middleware 130B, for example, and may include at least one interface or function (e.g., a command) for a file control, a window control, an image processing, a text (or message) control, or the like.

According an embodiment, the application 130D may include a Short Message Service (SMS)/Multimedia Message Service (MMS) application, an email application, a calendar application, an alarm application, a healthcare application (e.g., an application for measuring an amount of exercise, a blood sugar level, etc.), an environment information application (e.g., an application for an atmospheric pressure information, a humidity information, a temperature information, etc.), or the like. Additionally or alternatively, the application 130D may be an application pertaining to information exchange between the electronic device 101 and an external electronic device 102. The application pertaining to the information exchange may include, for example, a notification relay application for transferring specific information to the external electronic device 102, or a device management application for managing the external electronic device 102.

For example, the notification relay application may include a function that transfers the notification information generated from the other applications (e.g., the SMS/MMS application, the email application, the healthcare application, the environment information application, or the like) of the electronic device 101. Additionally or alternatively, the notification relay application, for example, may receive the notification information from the external electronic device 102 to provide the same to the user. For example, the device management application may manage (e.g., install, delete, or update): features (e.g., turning-on/off of the external electronic device itself (or some elements thereof) or a brightness (or resolution) adjustment of the display) for at least a portion of the external electronic device 102 that communicates with the electronic device 101; an application that operates in the external electronic device 102, or a service (e.g., voice call service or messaging service) which is provided in the external electronic device 102.

According to an embodiment, the application 130D may include an application which is designated according to an attribute (e.g., a kind of the electronic device) of the external electronic device 102. For example, when the external electronic device 102 is an MP3 player, the application 130D may be an application pertaining to music play. In a similar manner, when the external electronic device 102 is a mobile medical equipment, the application 130D may be an application pertaining to the healthcare. In an embodiment, the application 130D may include at least one of an application designated in the electronic device 101 or an application received from other electronic devices (e.g., a server 106 or external electronic device 102).

For example, the input/output interface 140 may act as an interface that transfers a command or data inputted from the user or the other external devices to the other elements of the electronic device 101. Further, the input/output interface 140 may output the command or the data received from the other elements of the electronic device 101 to the other external devices.

For example, the display 150 may include a Liquid Crystal Display (LCD), a Light Emitting Diode (LED) display, an Organic LED (OLED) display, a Micro ElectroMechanical Systems (MEMS) display, or an electronic paper display. For example, the display 150 may display various contents (e.g., a text, an image, a video, an icon, a symbol, etc.) to the user. The display 150 may include a touch screen, and, for example, may receive a touch, gesture, proximity, or hovering input using an electronic pen or a part of the user's body.

The communication interface 160 may setup a communication between the electronic device 101 and other electronic devices (e.g., the external electronic device 102 or the server 106). For example the communication interface 160 may be connected to a network 162 through a wireless or wired communication to communicate with the external electronic device 104.

The wireless communication may use, for example, at least one of Long-Term Evolution (LTE), LTE-Advanced (LTE-A), Code Division Multiple Access (CDMA), Wideband CDMA (WCDMA), Universal Mobile Telecommunication System (UMTS), Wireless Broadband (WiBro), or Global System for Mobile communications (GSM) as a cellular communication protocol. The wired communication may include, for example, at least one of a Universal Serial Bus (USB), a High Definition Multimedia Interface (HDMI), a Recommended Standard 232 (RS-232), a Plain Old Telephone Service (POTS), etc. The network 162 may include a telecommunications network, for example, at least one of a computer network (e.g., a Local Area Network (LAN) or a Wide Area Network (WAN)), an Internet, or a telephone network.

According to an embodiment, the network 162 may be a telecommunications network. The telecommunications network may include at least one of the computer network, the Internet, the Internet of Things, or the telephone network. According to an embodiment, a protocol (e.g., a transport layer protocol, a data link layer protocol, or a physical layer protocol) for a communication between the electronic device 101 and the external electronic device 102 or 104 may be supported in at least one of the application 130D, the API 130C, the middleware 130B, the kernel 130A, or the communication interface 160.

According to an embodiment, the application operation module 170 may support driving of the electronic device 101 by performing at least one of operations (or features) implemented in the electronic device 101. For example, the server 106 may include a communication control server module 108 that supports the application operation module 170 implemented in the electronic device 101. For example, the communication control server module 108 may include at least one element of the application operation module 170, and may perform (e.g., act as a proxy) at least one of the operations performed by the application operation module 170.

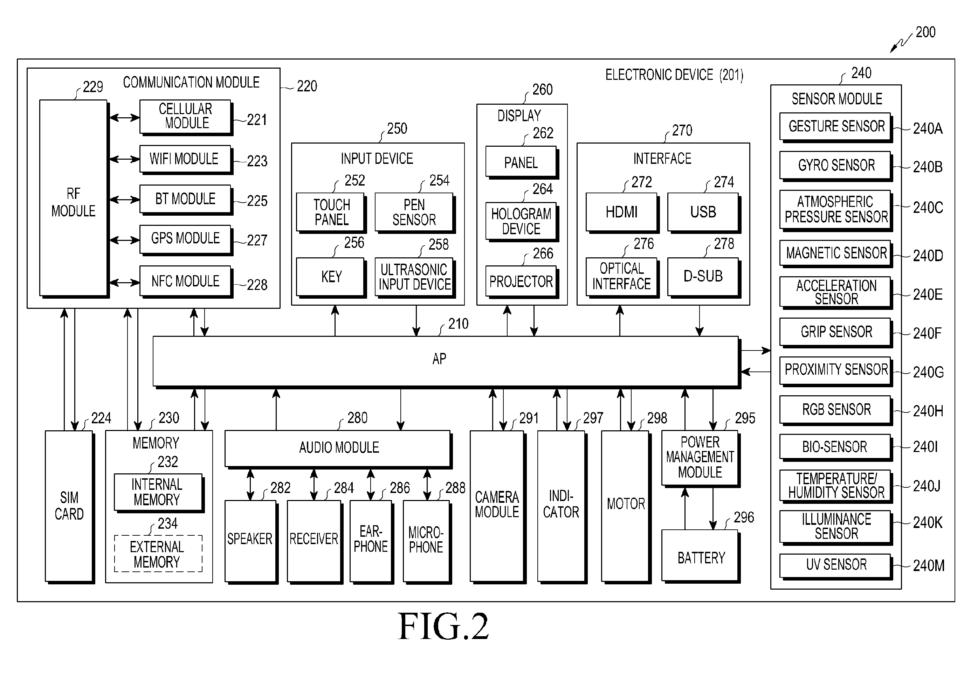

The application operation module 170 may process at least a portion of information provided from other elements (e.g., the processor 120, the memory 130, the input/output interface 140, the communication interface 160, etc.), and may use the processed information in various ways. For example, the application operation module 170 may control at least some of the features of the electronic device 101 using the processor 120 or independently of the processor 120 so that the electronic device 101 works together other electronic device (e.g., the external electronic device 102 or the server 106). According to an embodiment, at least one element of the application operation module 170 may be included in the server 106 (e.g., the communication control server module 108) and at least one operation implemented in the application operation module 170 may be supported from the server 106. Additional information regarding the application operation module 170 will be provided with reference to FIG. 2.

FIG. 2 is a block diagram of an electronic device 200 according to an embodiment of the present disclosure.

Referring to FIG. 2, the electronic device 200 may include, for example, the entire electronic device 101 described above, or a portion of thereof. The electronic device 200 may include at least one of one or more Application Processor (AP) 210, a communication module 220, a Subscriber Identification Module (SIM) card 224, a memory 230, a sensor module 240, an input device 250, a display 260, an interface 270, an audio module 280, a camera module 291, a power management module 295, a battery 296, an indicator 297, or a motor 298.

The AP 210 may drive an operating system or an application program to control a plurality of hardware or software elements connected to the AP 210, and may perform processing or calculation on data including multimedia data. The AP 210 may be implemented as a System on Chip (SoC). According to an embodiment of the present disclosure, the AP 210 may further include (not shown) a Graphic Processing Unit (GPU) and/or an image signal processor. The AP 210 may include at least some (e.g., a cellular module 221) of the elements illustrated in FIG. 2. The AP 210 may load and process a command or data, which is received from at least one of other elements (e.g., a non-volatile memory), and may store various data in the non-volatile memory.

The communication module 220 (e.g., the communication interface 160) may perform data transmission and reception between the electronic device 200 and other electronic devices (e.g., the external electronic device 102 or the sever 106). According to an embodiment of the present disclosure, the communication module 220 may include at least one of a cellular module 221, a WiFi module 223, a BLUETOOTH (BT) module 225, a Global Positioning System (GPS) module 227, a Near Field Communication (NFC) module 228, or a Radio Frequency (RF) module 229.

The cellular module 221 may provide a voice call, a video call, a message service, an internet service, etc. through a communication network (e.g., LTE, LTE-A, CDMA, WCDMA, UMTS, WiBro, GSM, etc.). In addition, the cellular module 221 may perform identification and authentication of the electronic device in the communication network using, for example, a Subscriber Identification Module (e.g., SIM card 224). According to an embodiment, the cellular module 221 may perform at least some of the features that the AP 210 can provide. According to an embodiment, the cellular module 221 may include (not shown) a Communication Processor (CP).

Each of the WiFi module 223, the BT module 225, the GPS module 227, or the NFC module 228 may include, for example, a processor for processing data which is transmitted and received through a corresponding module. According to an embodiment, at least some (e.g., two or more) of the WiFi module 223, the BT module 225, the GPS module 227, or the NFC module 228 may be included a single Integrated Chip (IC) or an IC package.

The RF module 229 may perform transmission and reception of data (e.g., transmission and reception of an RF signal). The RF module 229 may include, for example, a transceiver, a Power Amplifier Module (PAM), a frequency filter, a low noise amplifier, etc. In addition, the RF module 229 may include (not shown) a connection portion with an antenna. According to an embodiment, at least one of the cellular module 221, the WiFi module 223, the BT module 225, the GPS module 227, or the NFC module 228 may perform the transmission and reception of the RF signal using a separated RF module other than the RF module 229.

The SIM card 224 may include, for example, a card including a Subscriber Identification Module (SIM) and/or an embedded SIM. The SIM card 224 may further include (not shown) unique identification information (e.g., an Integrated Circuit Card IDentifier (ICCID)) or subscriber information (e.g., an International Mobile Subscriber Identity (IMSI)).

The memory 230 (e.g., the memory 130) may be an internal memory 232 or an external memory 234. The internal memory 232 may include, for example, at least one of (not shown) a volatile memory (e.g., a Dynamic Random Access Memory (RAM) (DRAM), a Static RAM (SRAM), a Synchronous DRAM (SDRAM), etc.) or a non-volatile memory (e.g., One Time Programmable Read Only Memory (ROM) (OTPROM), Programmable ROM (PROM), an Erasable and Programmable ROM (EPROM), an Electrically Erasable and Programmable ROM (EEPROM), a mask ROM, a flash ROM, a flash memory (e.g., NAND flash, NOR flash, etc.), a hard drive, a Solid State Drive (SSD)). The external memory 234 may include (not shown) a flash drive such as a Compact Flash (CF), a Secure Digital (SD), a Micro-SD, a Mini-SD, an eXtreme Digital (xD), a memory stick, etc. The external memory 234 may be connected to the electronic device 200 functionally and/or physically through various interfaces.

The sensor module 240 may measure physical quantity or detect an operation status of the electronic device 200 to convert the measured and detected information into an electrical signal. The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a color sensor 240H (e.g., a Red, Green, Blue (RGB) sensor), a biometric sensor (bio-sensor) 240I, a temperature/humidity sensor 240J, an illuminance sensor 240K, or an Ultra Violet (UV) sensor 240M. Additionally or alternatively, the sensor module 240 may include, for example (not shown) an olfactory sensor (E-nose sensor), an electromyography sensor (EMG sensor), an electroencephalogram sensor (EEG sensor), an electrocardiogram sensor (ECG sensor), an Infrared sensor (Ir sensor), an iris sensor, or a fingerprint sensor, etc. The sensor module 240 may further include (not shown) a control circuit that controls the at least one of the sensors therein. According to an embodiment, as a part of the AP 210 or a separate manner from the AP 210, the electronic device 200 may further include a processor configured to control the sensor module 240 to control the sensor module 240 when the AP 210 is in a sleep state.

The input device 250 may include a touch panel 252, a pen sensor (e.g., a digital pen sensor) 254, a key 256, or an ultrasonic input device 258. The touch panel 252 may recognize a touch input or a proximity input using, for example, at least one of a capacitive scheme, a resistive scheme, an infrared method, or an ultrasonic wave scheme. In addition, the touch panel 252 may further include (not shown) a control circuit. The touch panel 252 may further include (not shown) a tactile layer to provide a tactile response to the user.

For example, the pen sensor 254 may be a portion of the touch panel or may include a separate sheet for recognition. The key 256 may include, for example, a physical button, an optical key, or a key pad. The ultrasonic input device 258 may check data by detecting a sound wave through a microphone (e.g., microphone 288) of the electronic device 200.

The display 260 (e.g., the display 150) may include a panel 262, a hologram device 264, or a projector 266. The display 260 may include a configuration which is the same as or similar to that of the display 150 of FIG. 1. The panel 262 may be implemented in, for example, a flexible, transparent, or wearable manner. The panel 262 may be implemented to be a single module together with the touch panel 252. The hologram device 264 may display a stereoscopic image in the air by using interference of light. The projector 266 may display an image by projecting light on a screen. The screen may be located in, for example, an inside or an outside of the electronic device 200. According to an embodiment, the display 260 may further include (not shown) a control circuit for controlling the panel 262, the hologram device 264, or the projector 266.

The interface 270 may include, for example a High-Definition Multimedia Interface (HDMI) 272, a Universal Serial Bus (USB) 274, an optical interface 276, or a D-subminiature (D-sub) 278. The interface 270 may be included in, for example, the communication interface 160 illustrated in FIG. 1. Additionally or alternatively, the interface 270 may include, for example, (not shown) a Mobile High-definition Link (MHL) interface, a Secure Digital (SD) card/Multi-Media Card (MMC) interface, or an Infrared Data Association (IrDA) standard interface.

The audio module 280 may convert a sound signal into an electrical signal, and vice versa. At least some elements of the audio module 280 may be included in, for example, the input/output interface 140 illustrated in FIG. 1. The audio module 280 may process sound information inputted or outputted through, for example, a speaker 282, a receiver 284, an earphone 286, a microphone 288, etc.

The camera module 291 is a device that can take still and moving images. According to an embodiment, the camera module 291 may include (not shown) one or more image sensor (e.g., a front sensor or a rear sensor), a lens, an Image Signal Processor (ISP), or a flash(e.g., an LED or xenon lamp).

The power management module 295 may manage power of the electronic device 200. Although not shown, the power management module 295 may include, for example, (not shown) a Power Management Integrated Circuit (PMIC), a charger IC, a battery gauge, or a fuel gauge. The PMIC may have, for example, a wired or wireless charging scheme. The wireless charging scheme may include, for example, a magnetic resonance scheme, a magnetic induction scheme, or an electromagnetic scheme, etc. and may further include an additional circuit (e.g., coil loop, resonant circuit, rectifier, etc.) for the wireless charging.

The battery gauge may measure, for example, a residual quantity of the battery, a voltage, current, or temperature thereof while the battery is being charged. The battery 296 may store or generate electricity, and may supply power to the electronic device 200 using the stored or generated electricity. The battery 296 may include, for example, a rechargeable battery or a solar battery.

The indicator 297 may display a particular state (e.g., booting state, message state, or charging state) of the electronic device 200 or a portion (e.g., the AP 210) of the electronic device 200. The motor 298 may convert an electrical signal to a mechanical vibration, and thus may generate a vibration or haptic effect, etc. Although not illustrated, the electronic device 200 may include a processing device (e.g., GPU) for supporting a mobile television (TV) service. The processing device for supporting the mobile TV may process media data according to, for example, a Digital Multimedia Broadcasting (DMB), a Digital Video Broadcasting (DVB), a Media Flow, etc.

The aforementioned elements of the electronic device according various embodiments of the present disclosure may respectively be configured by one or more components, the corresponding elements may be named variously according to a sort of the electronic device. The electronic device according various embodiments of the present disclosure may be configured by at least one of the aforementioned elements, and some elements may be omitted or may include additional other elements. In addition, some elements of the electronic device according an embodiment of the present disclosure are coupled to be configured into a single entity, thereby performing the functions of the corresponding elements before being coupled.

A 'module' which is used in various embodiments of the present disclosure may be understood to mean, for example a unit including one or a combination of two or more of a hardware, a software, or a firmware. The 'module' may be interchangeably used with, for example, a unit, a logic, a logical block, a component, a circuit, etc. The 'module' may be a minimum unit of a single component or a portion thereof. The 'module' may be a minimum unit that performs one or more features or a portion thereof. The 'module' may be mechanically or electrically implemented. For example, the 'module' according to various embodiments of the present disclosure may include at least one of an Application-Specific Integrated Circuit (ASIC) chip, Field-Programmable Gate Arrays (FPGAs), or a programmable-logic device which performs an operation which is known or is to be developed.

According to various embodiments, at least a portion of a device (e.g., modules or features thereof) or a method (e.g., operations), according to various embodiments of the present disclosure, may be implemented using, for example, a command stored in a computer-readable storage medium. When the command is executed by one or more processors (e.g., processor 120), the one or more processors may perform a feature corresponding to the command. The computer-readable storage medium may be, for example, the memory 130. At least a portion of the programming module may be implemented (e.g., executed) by a processor 120. At least a portion of the programming module may include, for example a module, a program, a routine, a set of instructions, a process, etc. for one or more features.

The computer-readable storage media may include a hard drive, a floppy disk, a magnetic media such as a magnetic tape, an optical media such as a Compact Disc ROM (CD-ROM) and a Digital Versatile Disc (DVD), a magneto-optical media such as a floptical disk, and a hardware device, such as a ROM, a RAM, a flash memory, etc., which is particularly implemented to store and perform a program command (e.g., programming module). In addition, the program command may include not only a mechanical language generated by a compiler, but also an advanced language code which can be executed in a computer using an interpreter, or the like. The aforementioned hardware device may be configured to operate as one or more software modules for the operations according various embodiments of the present disclosure, vice versa.

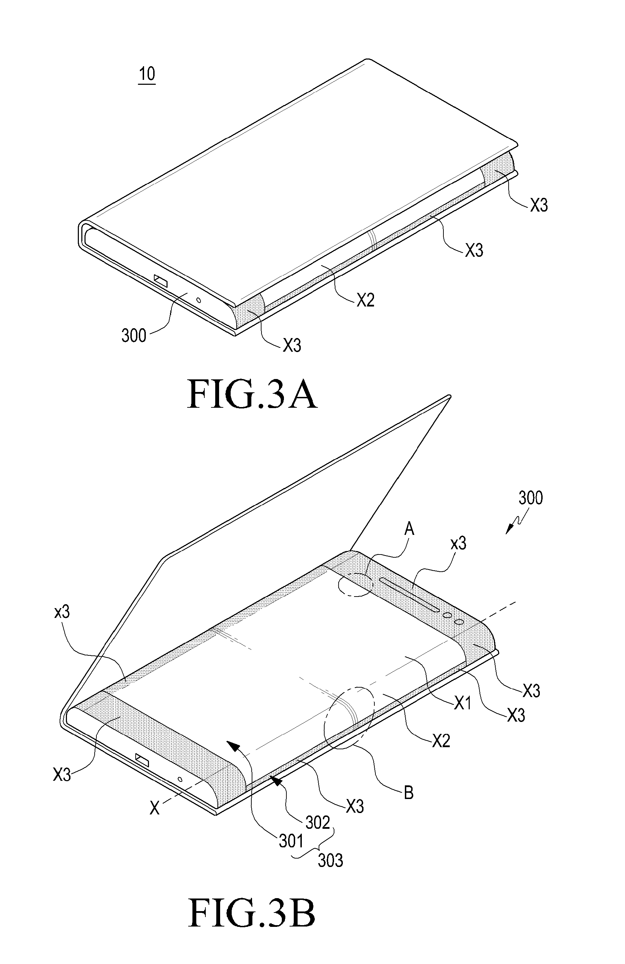

Hereinafter, a display device 300 according various embodiments of the present disclosure will be described in detail with reference to FIGS. 3 through 22.

FIG. 3 is a view illustrating a display device according an embodiment of the present disclosure.

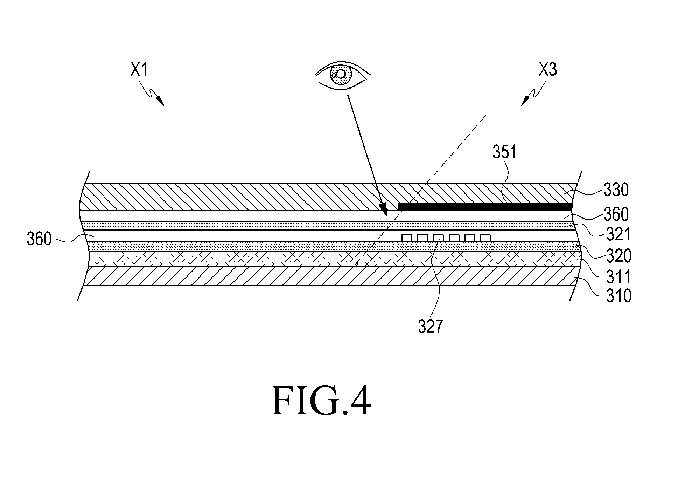

FIG. 4 is a view schematically illustrating a first screen region and a non-screen region around the first screen region in a display device according to an embodiment of the present disclosure.

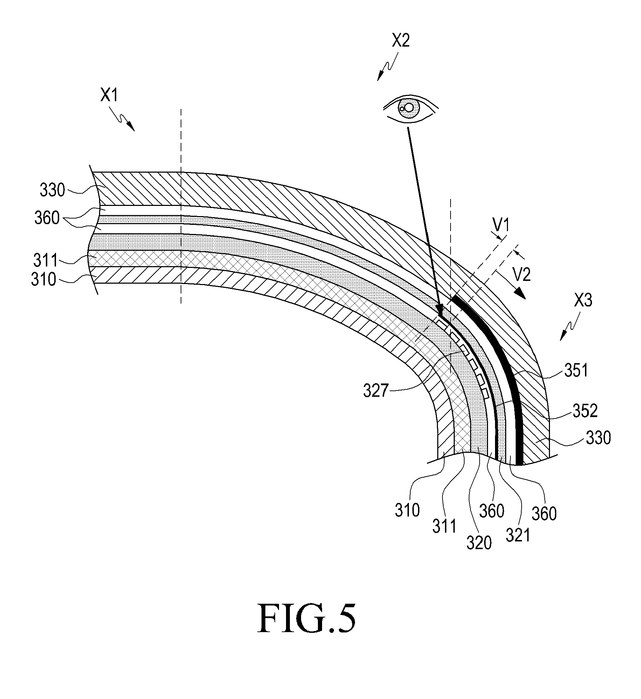

FIG. 5 is a view schematically illustrating a second screen region and a non-screen region around the second screen region in a display device according to an embodiment of the present disclosure.

Referring to FIGS. 3 through 5, the display device 300 according various embodiments of the present disclosure may formed by laminating various panels. In addition, input and output may be made possibly therein according to a touch. The display device 300 may include a display unit 303 and a bezel unit. The display unit 303 includes a screen display unit (hereinafter, referred to as a 'screen unit 301') of screen regions X1 and X2 in which a screen is displayed. The bezel unit of a non-screen region X3 surrounds the screen unit 301. The screen unit 301 of the display unit 303 may include the screen region X1 (hereinafter, referred to as a 'first screen region') of which at least one border is curved to be flat and the screen region X2 (hereinafter, referred to as a 'second screen region') which is curved. The display device 300 may implement an input according a touch or a proximity of an object as described above with reference to FIG. 1 or FIG. 2, and may display an image according to a user's environment. In addition, the display device 300 may display an input by an input device and an output according to the input. The input device may be an object with a charge such as a hand, a digitizer pen, or a stylus pen. The display device 300 according to an embodiment of the present disclosure may be inputted with a continuous movement of one of at least one touch. According to an embodiment of the present disclosure, the 'touch" is not limited to a direct touch of a user's body or an input device on the display device 300, but may include a non-touch, for example, a proximity detection. In addition, a detectable interval in the display device 300 may be changed according to a performance or a structure of the electronic device.

The display device 300 of the present disclosure may include a body (not shown) and the display unit 303. The body may support to mount the display unit 303, may mount modules such as (not shown) a circuit substrate or a display bracket, and the display unit 303 may be provided to be exposed to one end of the body.

The display unit 303 may include a display panel 310, at least one of input/output panels 320 and 370, a window cover 330, an adhesive member 360 for coupling the panels 320 and 370, etc. The panels 320 and 370 may be disposed by being laminated on each other. The display unit 303, in which the panels 320 and 370 are laminated, may include the screen unit 301, a circuit substrate 329, etc. The screen unit 301 may include the first screen region X1 and the second screen region X2 which is curved from the first screen region X1. The circuit 329, or the like, in which connection lines 327, a touch ICT, etc., which will be described later, are mounted, may be disposed to surround the screen unit 301. The display unit 303 may include the bezel unit 302 of the non-screen region X3 which is covered by non-transparent layers 351 and 352.

According to an embodiment of the present disclosure, in order to restrict the internal visualization of the display unit 303 generated when the display unit 303 includes the curved screen unit 301 (or more specifically, when the second screen region X2 of the screen unit 301 is disposed to be curved from the first screen region X1), the second non-transparent layer 352 and the first non-transparent layer 351 may be disposed to be doubly laminated in at least one end of the border portions of the curved second screen region X2, detachment limit module may be disposed to prevent the laminated panels from being detached in a curved region in the at least one side of the border portions of the curved second screen region X2, different pressure values and temperature values may be applied to a flat region (e.g., the first screen region X1 and the non-screen region X3 adjacent thereto) and a curved region (e.g., the second screen region X2 and the non-screen region X3) in the at least one side of the border portions of the curved second screen region X2 when the laminated panels are coupled to each other by being laminated, and a sealing member 380 may be disposed in the at least one side of the border portions of the curved second screen region X2 to compensate and seals difference in level at end portions generated when the laminated panels are curved.

According to an embodiment of the present disclosure, the display panel 310 may include at least one of a LCD display, a LED display, an OLED display, or an active matrix OLED (AMOLED) display. The display panel 310 may display assorted operation states, which are implemented in the electronic device 10, and assorted images according to an application execution and a service.

In the display panel 310, a region corresponding to the first screen region X1 may be disposed to be flat and a region corresponding to the second screen region X2 may be disposed to be curved having a predetermined curvature. In addition, a polarization panel 311 may be laminated on one side (hereinafter, referred to as an "upper surface") of the display panel 310. In the polarization panel 311, a region corresponding to the first screen region X1 may be disposed to be flat and a region corresponding to the second screen region X2 may be disposed to be curved having a predetermined curvature.

According to an embodiment of the present disclosure, the input/output device may include at least one of a first panel member, which, in the present disclosure, corresponds to a touch panel 320 to be described later, or a second panel member, which, in the present disclosure, corresponds to a digitizer panel 371 and 370 to be described later. First, while, in the first embodiment of the present disclosure, a case in which only the first panel member is disposed will be described as an example, the second panel member may be disposed together on another side of the display panel as described later.

According to an embodiment of the present disclosure, the first panel member may include a panel (e.g., touch panel 320) that can implement an input/output according to a touch,

According to an embodiment of the present disclosure, the touch panel 320 may be implemented using various schemes such as a capacitive type touch panel, an electromagnetic resonance type (EMR) type touch panel, a resistive touch panel, an infrared type touch panel, or an acoustic wave type touch panel, etc., or, any combination thereof.

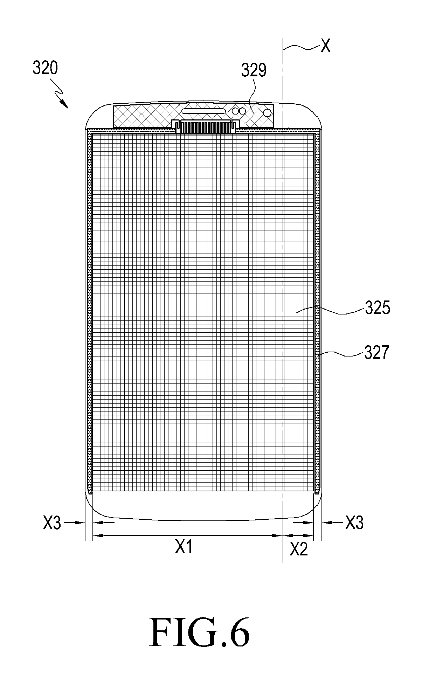

FIG. 6 is a view schematically illustrating a touch panel of a display device according to an embodiment of the present disclosure.

Referring to FIG. 6, the touch panel 320 may be laminated on an upper surface of the display panel 310 described above, or more specifically, an upper surface of the polarization panel 311. In the touch panel 320, Tx and Rx signal patterns 325 that facilitate the input/output according to the touch on a surface facing the screen unit 301 may be formed. A transparent film member, in which the connection lines 327 of the signal pattern 325 are mounted, may be disposed in the non-screen region. A reinforcing member 321 may be laminated by an adhesive member 360 such as an Optically Clear Adhesive (OCA) film. The touch panel 320 may be disposed in a flat region corresponding to the first screen region X1 and a curved region with a predetermined curvature to correspond to the second screen region X2 curved from the first screen region X1. The signal pattern 325 may be located in the first screen region X1 and the second screen region X2, and the connection lines 327 may be located in the bezel unit 302 to be invisible by being covered through the non-transparent layers 351 and 352 which will be described later.

The window cover 330 may be formed of a transparent glass, the first screen region X1 and at least one of border portions of the first screen region X1

A flat region and a curved region may be formed to correspond to the second screen region X2 which is curved with a predetermined curvature. The touch panel 320, more specifically, a reinforcing member 321 and an adhesive member 360, may be coupled to be laminated in a lower surface of the window cover 330 by, for example, an optically clear adhesive film.

As described above, the display unit 303 including the flat first screen region X and the curved second screen region X2 may be formed by laminating various panels in an order of the polarization panel 311, the touch panel 320, the adhesive member 360, the reinforcing member 321, and the window cover 330 in an upper side of the display panel 310.

The display unit 303 in which the afore-mentioned panels are laminated may include the screen unit 301 and the bezel unit 302 of the non-screen region X3 as described above (see FIGS. 3 through 5).

The screen unit 301, which can detect a touch and implement an input/output such as a display of a screen, or the like, may include the flat first screen region X1 and the second screen region X2, which is curved with a predetermined curvature, in at least one of the border portions of the first screen region X1. In an embodiment of the present disclosure, for example, the first screen region X1 may have a flat rectangular shape, and the second screen region X2 may be curved by extending from one side of the first screen region X1 (more specifically, a right side thereof). However, the screen region X2 may be formed to be curved by extending from both sides of the first screen region X1, or may be formed to be curved by extending from upper and lower surfaces, or the both sides and the upper and lower surfaces, but the present disclosure may be modified in various form. Accordingly, the aforementioned panels such as the display panel 310, the polarization panel 311, the touch panel 320, the adhesive member 360, the reinforcing member 321, and the window cover 330 may be disclosed to be flat in the first screen region X1 and may be laminated to be curved with a predetermined curvature in the second screen region X2.

The non-screen region X3 may be disposed along the border portions of the screen unit 301. In the non-screen region X3, at least one of the non-transparent layers 351 and 352 may be disposed to prevent visualization of a substrate unit such as the connection lines 327, the touch IC, etc., which are disposed along the border portions of the screen unit 301. The non-transparent layers 351 and 352 according to an embodiment of the present disclosure may have different structures from each other in a flat region and a curved region with a curvature. That is, a non-transparent layer based on a single structure may be disposed in at least one of the border portions of the first screen region X1, and non-transparent layers based on a double structure may be disposed in at least one of the border portions of the second screen region X2 which is curved with a curvature.

Specifically, in the non-screen region X3, the non-transparent layer 351 may be provided along in at least one of the border portions of the first screen region X1 (see FIGS. 3 and 4).

The non-transparent layer 351 may be disposed below the window cover 330 to cover the non-screen region X3. The non-transparent layer 351 may be disposed to shield the non-screen region X3 along at least one of the border portions of the first screen region X1 among the border portions of the screen unit 301. The non-screen region X3 other than the flat first screen region X1 may be shield by the non-transparent layer 351 to restrict internal visualization of the display unit 303.

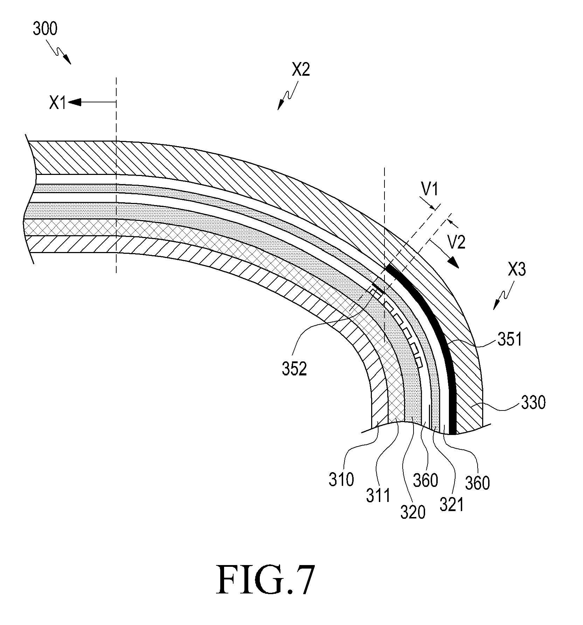

FIG. 7 is a view illustrating that a second non-transparent layer is disposed in one end of a reinforcing member and mounted in a visualized region in a display device according to an embodiment of the present disclosure.

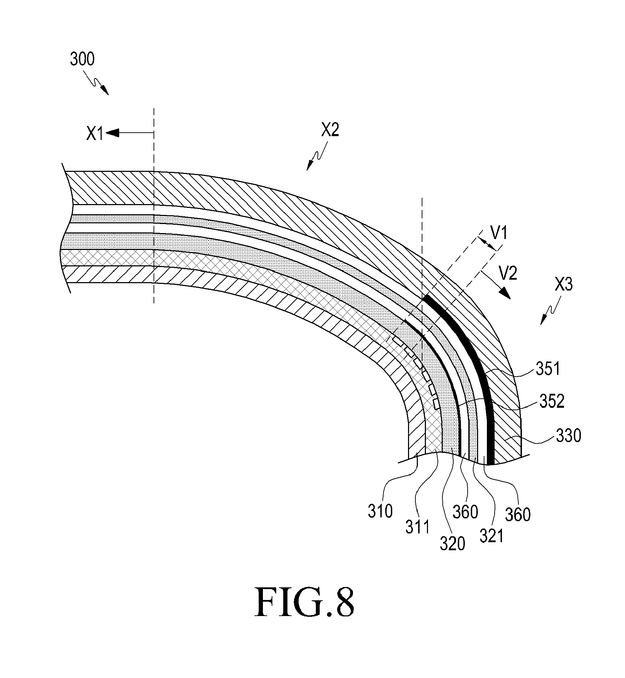

FIG. 8 is a view illustrating that a second non-transparent layer is disposed in one end of a touch panel and mounted in a visible region and an invisible region in a display device according to an embodiment of the present disclosure.

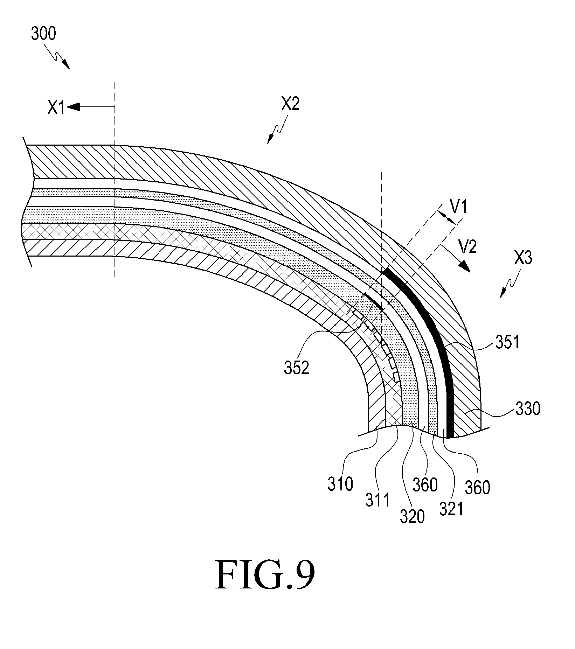

FIG. 9 is a view illustrating that a second non-transparent layer is disposed in one end of a touch panel and mounted in a visible region in a display device according to an embodiment of the present disclosure.

Referring to FIGS. 7 through 9, a second non-transparent layer 352 may be disposed along in at least one of the border portions of the second screen region X1. Here, the border portions, in which the second non-transparent layer 352 is provided, may be a portion which is visualized when the second screen region X2 is curved from the first screen region X1. The second non-transparent layer 352 may be disposed to be separate from the first non-transparent layer 351 to cover a visible region V1, or the visible region V1 and an invisible region V2 (See FIGS. 3 and 5). Here, in the visible region V1, visible light reflected from the connection lines 327 disposed in the non-screen region may be visualized when the screen unit 301 is curved, and the second non-transparent layer 352 may be disposed to shield the visual light reflected from the connection lines when the screen unit 301 is curved. Thus, the double structure-based non-transparent layers 351 and 352 may be formed in at least one of the border portions of the second screen region X2. In detail, compared to the first screen region X1, since the second screen region X2 is curved with a predetermined curvature, a view angle may be different from each other in the first screen region X1 and the second screen region X2. According to an embodiment of the present disclosure, in a view angle of the display device 300, the non-screen region X3 disposed in the border portions of the first screen region X1 may not be visualized owing to the first non-transparent layer 351, however the visible region V1 of the non-screen region X3 in the border portions of the first screen region X1 may be visualized. Thus, the second non-transparent layer 352 may be disposed to cover the visible region V1 of the second screen region X2 or the visible and invisible regions V1+V2, and may cover the non-screen region X3, which is disposed in the border portions of the second screen region X2, in a double manner.

As described above, the second non-transparent layer 352 may be disposed below the first non-transparent layer 351, and may be spaced apart from the first non-transparent layer 351. The second non-transparent layer 352 may be mounted in a panel laminated on the touch panel 320 to cover the non-screen region X3 (specifically, the connection lines 327 of the touch panel 320). For example, the second non-transparent layer 352 may be disposed in one side of at least one of an upper surface or a lower surface of the reinforcing member 321 which is laminated on an upper surface of the touch panel 320. In contrast, when a direction in which the signal pattern 325 or the connection lines 327 are mounted is disposed toward the display panel 310, the second non-transparent layer 352 may be disposed along one side of the borders of the touch panel 320.

Further, the second non-transparent layer 352 may be disposed to cover the visible region V1 which is visualized toward the non-screen region X3 at an end portion of the second screen region X2, or may be disposed to cover the entire non-screen region X3 including the visible region V1 which is visualized toward the non-screen region X3 at an end portion of the second screen region X2. That is, the second non-transparent layer 352 may have a mounting width to cover only the non-screen region X3 (in detail, the visible region V1 which is visualized toward the non-screen region X3 at an end portion of the second screen region X2) according to a viewing angle. In contrast, the second non-transparent layer 352 may be disposed to cover both the visible region V1 which is visualized toward the non-screen region X3 at an end portion of the second screen region X2) and the non-screen region X3 including the visible region V1.

The aforementioned non-transparent layers 351 and 352 may be covered to restrict the visibility of the non-screen region X3 of the display unit 303. The non-transparent layers 351 and 352 may have a non-pattern without a shape or a pattern. In contrast, the non-transparent layers 351 and 352 may have a pattern of at least one shape of a hair line, a stitch, a mesh, an embossing, a punching.

The non-transparent layers 351 and 352 may include at least one material of ink, film, tape, resin to shield the non-screen region X3 and the materials may be formed by at least one manner of being printed, painted, deposited, or the like.

The display device 300, as described above, may use the screen unit 301 extending to the second screen region X2 as well as the first screen region X1. In addition, by doubly shielding the visible region of the border portions of the second screen region X2 which is curved with a predetermined curvature according to the viewing angle of the display unit 303, the visualization of the non-screen region X3 may be prevented even at the viewing angle.

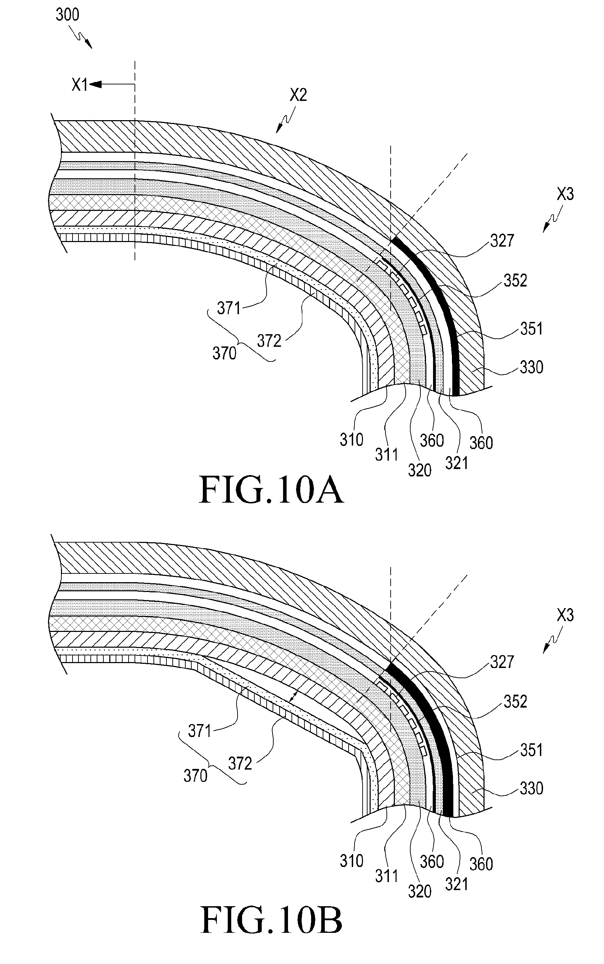

FIGS. 10A and 10B are a view illustrating a case in which a second panel member is laminated on a display unit in a display device according to an embodiment of the present disclosure.

Referring to FIGS. 10A and 10B, as described above, the display unit 303 including the flat first screen region and the curved second screen region X2 may be formed by laminating various panels. For example, panels including the display panel 310, the touch panel 320, the window cover 330, etc. may be laminated, and a second panel member such as the digitizer panel 371, which implements an input/output feature with a different manner from the touch panel 320, may be disposed in another surface of the display panel 310.

The screen unit 301 of the display unit 303 including the laminated panels may be disposed to be curved, and thus, the laminated panels may be laminated and curved with a predetermined curvature in a curved region X1+X2. The laminated panels may have different an elastic force, a tensile force, etc. from each other according to materials of which they are made. In addition, even for a single panel, a degree in which the panels are curved may be different from each other depending on a lamination location of the panel. Thus, as depicted in FIG. 10B, the panels may be detached in a curved region according to a laminated position, a restoring force corresponding thereto, or a relationship with a panel which is laminated on the rear surface thereof. For example, if a panel laminated on a relatively lower surface has a relatively weak coupling force compared to coupling forces to other panels and has a relatively great restoring force, the panel laminated on the relatively lower surface may be detached from the panel laminated on the upper surface thereof due to the relatively weak coupling force and great restoring force according to a restoring force while being curved, lapse of time, etc.

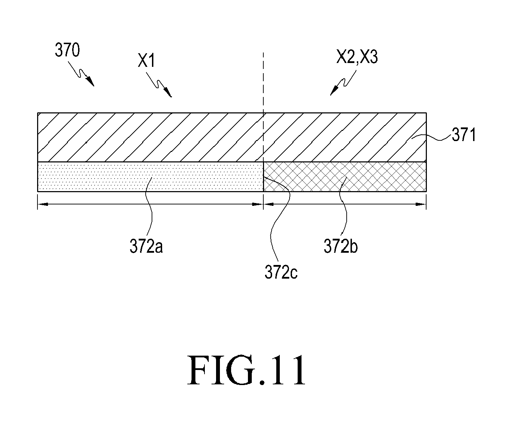

Hereinafter, various configurations of restricting a detachment between panels generated when the screen unit 301 is curved will be described with reference with FIGS. 11 through 17.

According to an embodiment of the present disclosure, a detachment limit module may be provided in the display unit 303 to prevent at least one of panels from being detached from other panels in the curve region when the screen unit 301 is curved. That is, the detachment limit module may work to maintain coupled states of the panels to each other while keeping a curved state thereof in the curved region even in the various detachable conditions.

According to an embodiment of the present disclosure, the detachment limit module may be described using five different embodiments from each other.

FIG. 11 is a view schematically illustrating a first embodiment of a detachment limit module in a display device according to an embodiment of the present disclosure.

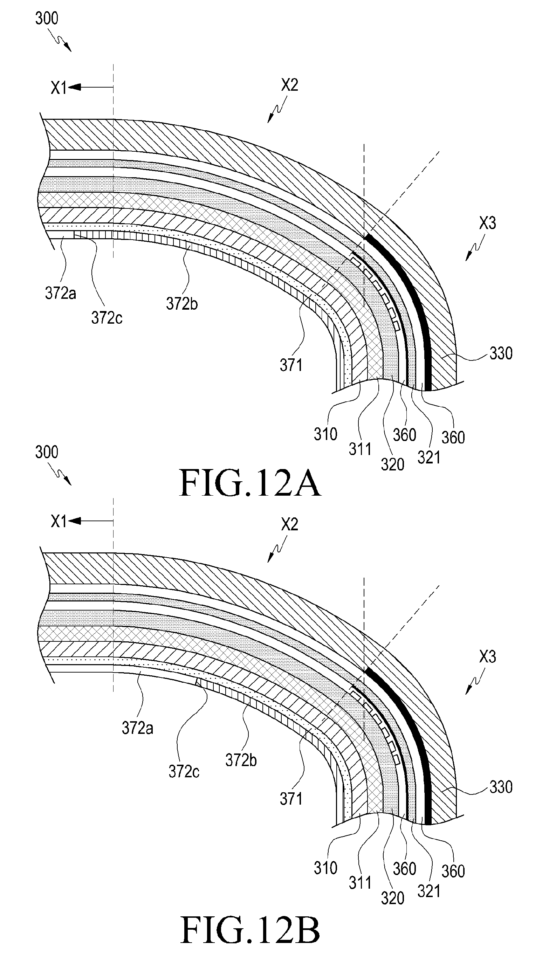

FIGS. 12A to 12C are views schematically illustrating a display unit including the detachment limit module according to the first embodiment in a display device according to an embodiment of the present disclosure.

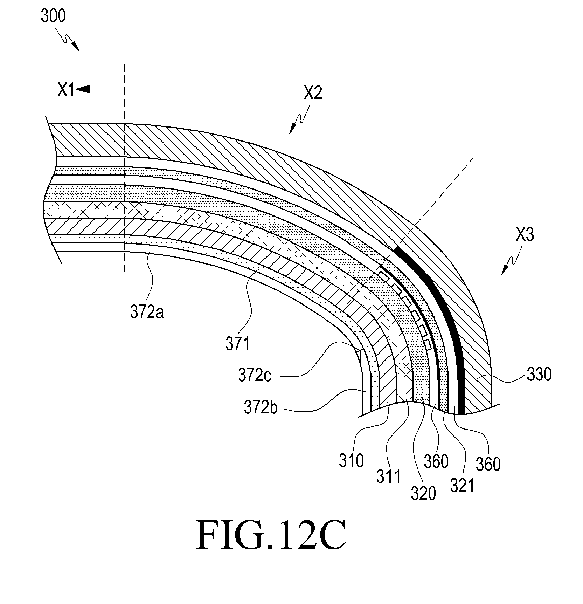

Referring to FIGS. 11, 12A, 12B, and 12C, the detachment limit module according to the first embodiment may be formed of different materials from each other in at least one of panels. At least one of the laminated panels may include the detachment limit module, and thus, a restoring force of the panel may be reduced and a detachment between panels generated in a curved region may be restricted. In detail, the detachment limit module may be formed by applying different materials to a laminated panel (which corresponds to a 'conductive sheet member 372' in the present disclosure) with respect to an axis X between the first screen region X1 and the second screen region X2. The first screen region X1 may be formed of a first material, and the second screen region X2 may be formed of a second material. In addition, a restoring force of a panel (which corresponds to a 'second conductive sheet 372b' in the present disclosure.) provided to the second screen region X2 may be smaller than a restoring force of a panel (which corresponds to a 'first conductive sheet 372a' in the present disclosure.) provided to the first screen region X1. In addition, a connection surface 372c of the panel including different materials from each other may be positioned on the first screen region X1 by leaning to the first screen region X1 with respect to the axis X between the first screen region X1 and the second screen region X2, may be positioned on the second screen region X2 by leaning to the second screen region X2, or may be positioned between the first and second screen region X1 and X2.

For example, according to an embodiment of the present disclosure, the second panel member implementing a different input/output scheme from the touch panel 320 may be disposed in a lower surface of the display panel 310, and the second panel member may include the digitizer panel 371 and the conductive sheet member 372. The conductive sheet member 372 may be disposed with a relatively high elastic force to have a high restoring force, compared to the digitizer panel 371. Thus, the detachment limit module may be implemented by applying the conductive sheet member 372 with different materials from each other. That is, the conductive sheet member 372 (hereinafter, referred to as the 'first conductive sheet 372a'), which is provided in the first screen region X1 with respect to the axis between the first screen region X1 and the second screen region X2, and the conductive sheet member 372 (hereinafter, referred to as the 'second conductive sheet 372b), which is provided in the second screen region X2, may have different materials from each other. The second conductive sheet 372b may include a material having a smaller restoring force than that of the first conductive sheet 372a. That is, when the first conductive sheet 372a provided in the first screen region X1 includes a copper sheet, the second conductive sheet 372b provided in the second screen region X2 may include a different material from the copper sheet, and may include a material having a smaller restoring force than that of the copper sheet.

In addition, a connection surface 372c between the first conductive sheet 372a and the second conductive sheet 372b may be positioned in at least one of a side of the first screen region X1 with respect to the axis X between the first screen region X1 and the second screen region X2, a side of the second screen region X2 with respect to the axis X between the first screen region X1 and the second screen region X2, or a portion between the first screen region X1 and the second screen region X2. Thus, the conductive sheet member 372 including different materials may have a relatively low restoring force, compared to the conductive sheet member 372 of a single material. Further, a restoring force of the conductive sheet member 372 including the different materials applied to the digitizer panel 371 may be a relatively low, compared to a restoring force of the conductive sheet member 372 including the single material applied to the digitizer panel 371. Accordingly, the digitizer panel 371 to which the conductive sheet member 372 having the different materials is coupled may not be detached from the display panel 310 and the digitizer panel 371 may maintain a coupled state to the display panel 310. The detachment limit module formed by applying a panel of the laminated panels with different materials may prevent a detachment between the panels which may occur when the screen unit 301 is curved.

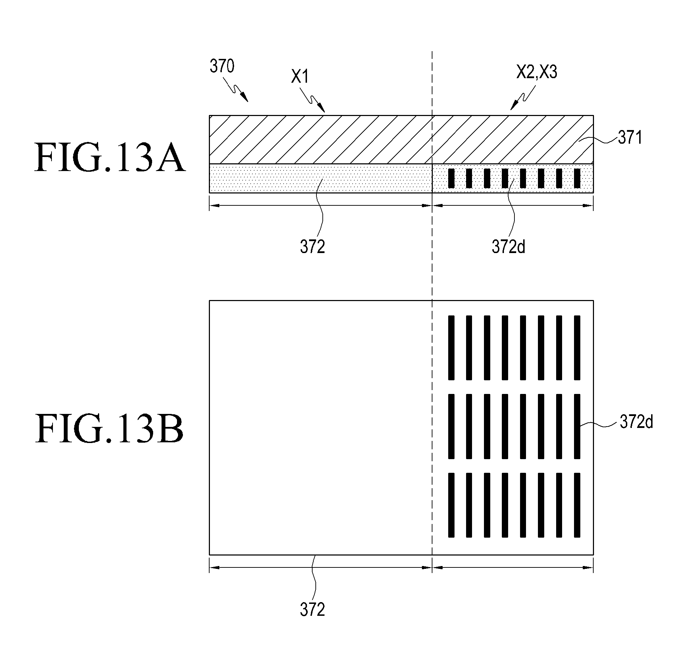

FIGS. 13A and 13B are a view schematically illustrating a second embodiment of a detachment limit module in a display device according to an embodiment of the present disclosure.

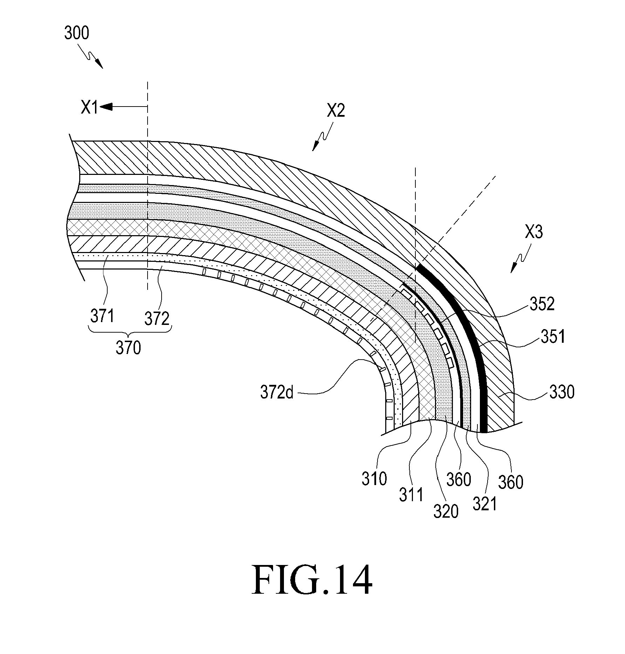

FIG. 14 is a view schematically illustrating a display unit including the detachment limit module according to the second embodiment in a display device according to an embodiment of the present disclosure.

Referring to FIGS. 13A, 13B, and 14, the detachment limit module according to the second embodiment of the present disclosure may include a plurality of slit units 372d in at least one of laminated panels. The slit units 372d may be disposed in a curved region X2+X3 of a curved panel (which corresponds to the 'conductive sheet member' 372) to reduce a restoring force of the panel and to restrict a detachment in the curved region of the panel.

For example, according to an embodiment of the present disclosure, the second panel member implementing a different input/output scheme from the touch panel 320 may be disposed in a lower surface of the display panel 310, and the second panel member may include the digitizer panel 371 and the conductive sheet member 372. The conductive sheet member 372 may be disposed with a relatively high elastic force to have a high restoring force, compared to the digitizer panel 371. Thus, the detachment limit module may be provided using the plurality of slit units 372d in the second screen region X2 of the conductive sheet member 372. According to an embodiment of the present disclosure, the slit units 372d may be formed in a hole shape which extends in a longitudinal direction. The slit units 372d may be disposed in the second screen region X2 with a regular arrangement. The plurality of the slit units 372d may reduce a restoring force generated in the second screen region X2 when the conductive sheet member 372 is curved to be in tension. Accordingly, the conductive sheet member 372 with the slit units 372d may reduce a restoring force applied to the digitizer panel 371, compared to the conductive sheet member 372 without the slit units 372d. Thus, although time lapses while the digitizer panel 371, to which the conductive sheet member 372 is coupled, is coupled to the display panel 310, detachment of the digitizer panel 371 from the display panel 310 may be prevented and the coupled state therebetween may be maintained. Thus, detachment between panels generated when the screen unit 301 is curved may be prevented by implementing the detachment limit module applying the slit units 372d in a curved region of a panel having a relatively high restoring force among the laminated panels of the display unit 303.

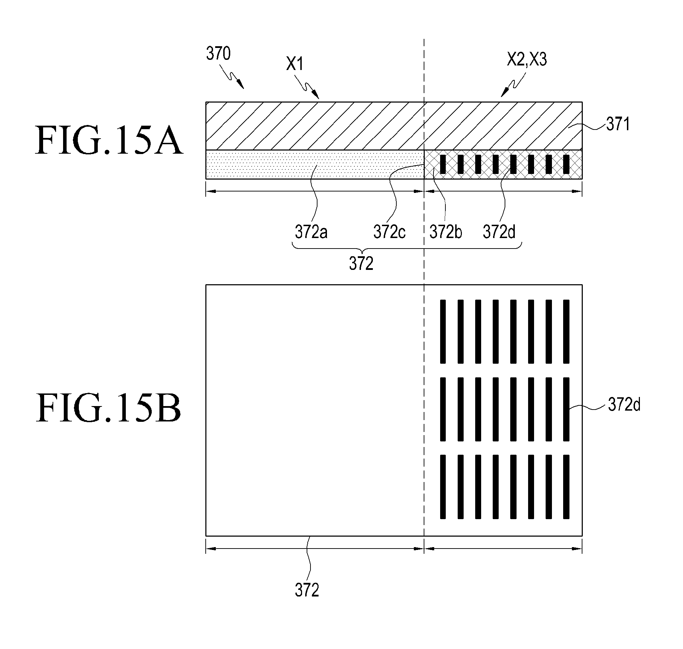

FIGS. 15A and 15B are a view schematically illustrating a third embodiment of a detachment limit module in a display device according to an embodiment of the present disclosure.

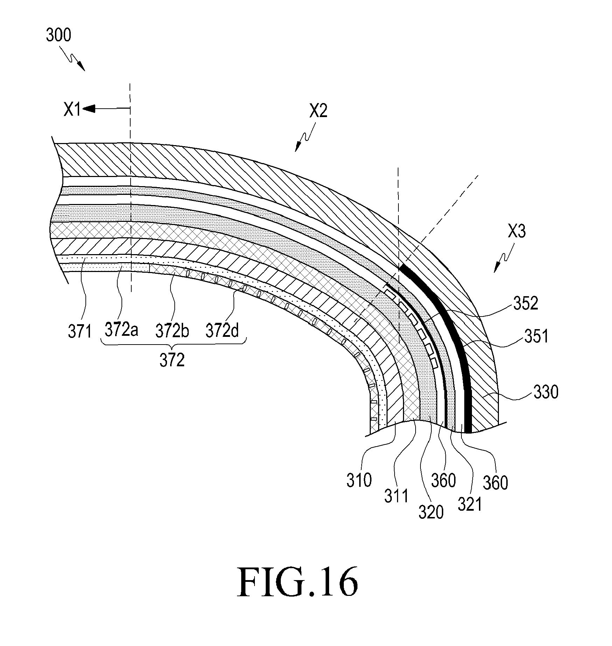

FIG. 16 is a view schematically illustrating a display unit including the detachment limit module according to the third embodiment in a display device according to an embodiment of the present disclosure.

Referring to FIGS. 15A, 15B, and 16, the detachment limit module according to the third embodiment of the present disclosure may be formed of different materials from each other in at least one of panels, and may include a plurality of slit units 372d in at least one of laminated panels.

The detachment limit module according to the third embodiment may have a lower restoring force than the restoring forces the detachment limit modules which are provided in the panels according to the first embodiment and the second embodiment by forming the slit units 372d in at least one of the panels including the different materials, and thus, detachment between the panels may be restricted.

In detail, the detachment limit module may be formed by applying different materials to a laminated panel (which corresponds to a 'conductive sheet member 372' in the present disclosure) with respect to an axis X between the first screen region X1 and the second screen region X2. The first screen region X1 may be formed of a first material, and the second screen region X2 may be formed of a second material. In addition, a restoring force of a panel (which corresponds to a 'second conductive sheet 372b' in the present disclosure.) provided to the second screen region X2 may be smaller than a restoring force of a panel (which corresponds to a 'first conductive sheet 372a' in the present disclosure.) provided to the first screen region X1. In addition, the slit unit 372d may be formed in a panel of the curved region X1+X2, that is, a panel formed of the second material. Thus, since the detachment limit module according to the third embodiment is formed of different materials and the slit units are formed therein, the panels may have a lower restoring force, compared those of the aforementioned first and second embodiments, and thus, detachment between the panels may be restricted.

For example, according to an embodiment of the present disclosure, the second panel member implementing a different input/output scheme from the touch panel 320 may be disposed in a lower surface of the display panel 310, and the second panel member may include the digitizer panel 371 and the conductive sheet member 372. The conductive sheet member 372 may be disposed with a relatively high elastic force to have a high restoring force, compared to the digitizer panel 371. Thus, the detachment limit module may be implemented by applying the conductive sheet member 372 with different materials of first and second materials and by forming the slit units 372d in the conductive sheet member 372 having the second material. That is, the conductive sheet member 372 (hereinafter, referred to as the 'first conductive sheet 372a') provided in the first screen region X1 with respect to the axis between the first screen region X1 and the second screen region X2 may have the first material, and the conductive sheet member 372 (hereinafter, referred to as the 'second conductive sheet 372b) provided in the second screen region X2 may have the second material different from the first material. In addition, second conductive sheet 372b may include a material having a small restoring force, compared to the first conductive sheet 372a, and the plurality of slit unit 372d may be provided in the second conductive sheet 372b. According to an embodiment of the present disclosure, the slit units 372d may be formed in a hole shape which extends in a longitudinal direction. The slit units 372d may be disposed in the second screen region X2 with a regular arrangement. When the conductive sheet member 372 is curved to be in tension, a restoring force generated in the second screen region X2 may be reduced due to materials having different restoring forces from each other and the slit units 372d. Thus, although time lapses while the digitizer panel 371, to which the conductive sheet member 372 is coupled, is coupled to the display panel 310, detachment of the digitizer panel 371 from the display panel 310 may be prevented and the coupled state therebetween may be maintained. Thus, detachment between panels generated when the screen unit 301 is curved may be prevented by implementing the detachment limit module applying the slit units 372d in a curved region of a panel having a relatively high restoring force among the laminated panels of the display unit 303.

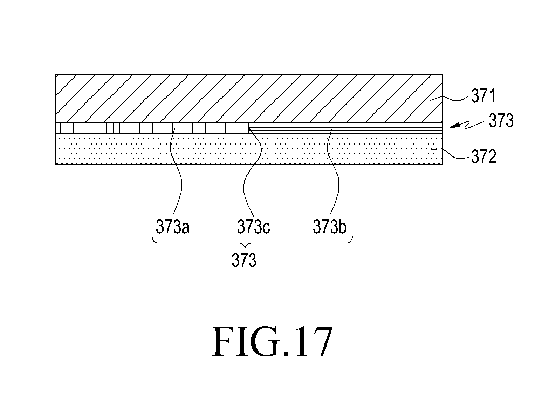

FIG. 17 is a view schematically illustrating a fourth embodiment of a detachment limit module in a display device according to an embodiment of the present disclosure.

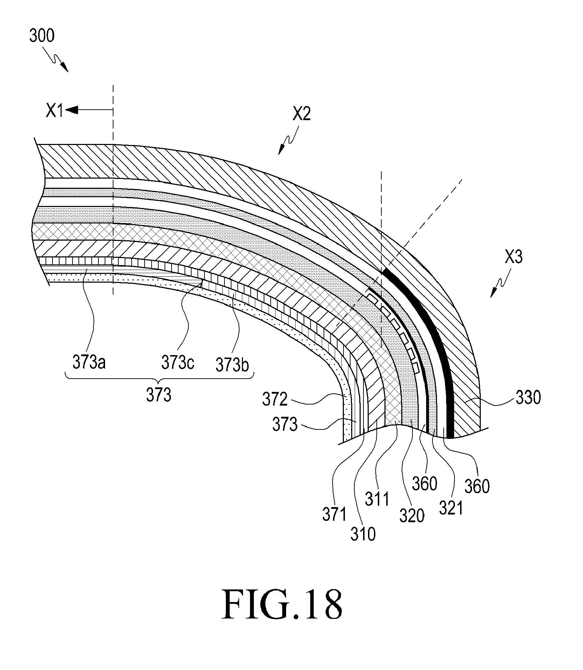

FIG. 18 is a view schematically illustrating a display unit including the detachment limit module according to the fourth embodiment in a display device according to an embodiment of the present disclosure.

Referring to FIGS. 17 and 18, the detachment limit module according to the fourth embodiment of the present disclosure may include a coupling member 373 by applying different materials from each other. The coupling member 373 is disposed between panels to couple the panels to each other. The coupling member 373 coupled between the panels may be disposed to have different materials from each other to restrict detachment between the panels by increasing an adhesive strength of a panel having a relatively high restoring force. In detail, the detachment limit module may include a first adhesive 373a and a second adhesive 373b. The first adhesive 373a may be disposed in the first screen region X1 of one side with respect to the axis X between the first screen region X1 and the second screen region. The second adhesive 373b may be disposed in the second screen region X2 of another side with respect to the axis between the first screen region X1 and the second screen region X2 may include second screen region X2. That is, the coupling member 373 may be applied using different materials each other in the first screen region X1 and the second screen region X2. In addition, an adhesive strength of the second adhesive 373b disposed in the second screen region X2 may be higher than an adhesive strength of the first adhesive 373a disposed in the first screen region X1. In addition, In addition, a connection surface 373c between the first adhesive 373a and the second adhesive 373b may be positioned on the first screen region X1 by leaning to the first screen region X1 with respect to the axis X between the first screen region X1 and the second screen region X2, or may be positioned on the second screen region X2 by leaning to the second screen region X2, or may be positioned between the first and second screen region X1 and X2.

For example, according to an embodiment of the present disclosure, the second panel member implementing a different input/output scheme from the touch panel 320 may be disposed in a lower surface of the display panel 310, the second panel member may include the digitizer panel 371 and the conductive sheet member 372, and the coupling member 373 may be disposed between the digitizer panel 371 and the conductive sheet member 372.

A restoring force of the conductive sheet member 372 generated in a curved region when the screen unit 301 may be higher than a restoring force of the conductive sheet member 372 generated in a flat region. Thus, the second adhesive 373b in the curved region (i.e., the second screen region X2) of the conductive sheet member 372 may include a material having a higher adhesive strength than that of the first adhesive 373a. Thus, since a coupling force due to an adhesive strength of the second adhesive 373b is greater than a force for being detached due to the restoring force of the conductive sheet member 372, the conductive sheet member 372 may be maintained to be in a coupled state to the digitizer panel 371.

Accordingly, the detachment between the panels generated when the screen unit 301 is curved may be prevented by implementing the detachment limit module in which the coupling member 373 having differential materials from each other are applied in the first screen region X1 and the second screen region X2, respectively to a curved region of at least one of laminated in the display unit 303.

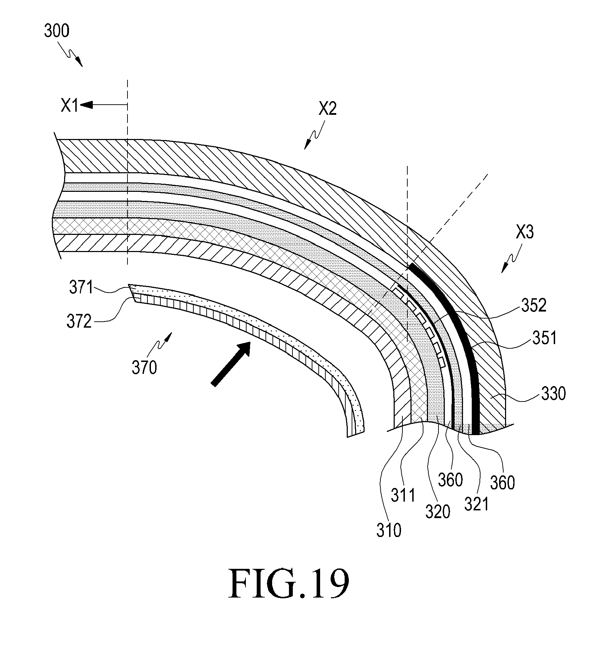

FIG. 19 is a view schematically illustrating a display unit including a detachment limit module according to a fifth embodiment in a display device according to an embodiment of the present disclosure.

Referring to FIG. 19, the detachment limit module according to the first embodiment may be realized by implementing a panel, which has a relatively high restoring force among the laminated panels, with a curved shape. That is, a shape of the panel may be processed in a curved shape, which is not in a flat shape, to be laminated on the curved screen unit 301. Since no restoring force is generated in the panel processed in a curved shape, detachment due to the restoring force may be restricted even when the panel processed in a curved shape is laminated on and coupled to other panels.

For example, according to an embodiment of the present disclosure, the second panel member implementing a different input/output scheme from the touch panel 320 may be disposed. The second panel member may include the digitizer panel 371 and the conductive sheet member 372. In this case, the detachment limit module may be implemented by forming a portion, which faces a border portion of the conductive sheet member 372 (i.e., the second screen region X2), in a curved shape. The conductive sheet member 372 formed in a curved shape with a predetermined curvature in the second screen region X2 may be coupled to the digitizer panel 371. In this case, since a curved region of the conductive sheet member 372 is formed in a curved shape, an additional restoring force may not be generated. Thus, detachment of the digitizer panel 371 from the display panel 310 by the conductive sheet member 372 may be restricted.

A structure, shape, configuration, etc. of the aforementioned detachment limit module of the present disclosure is not limited the embodiments described above. According to an embodiment of the present disclosure, if panels are curved to correspond to the second screen region X2, the detachment limit module may be modified in various forms such that a structure, shape, configuration, etc. of the detachment limit module can compensate the restoring force of the panel having a relatively high restoring force in a curved region.

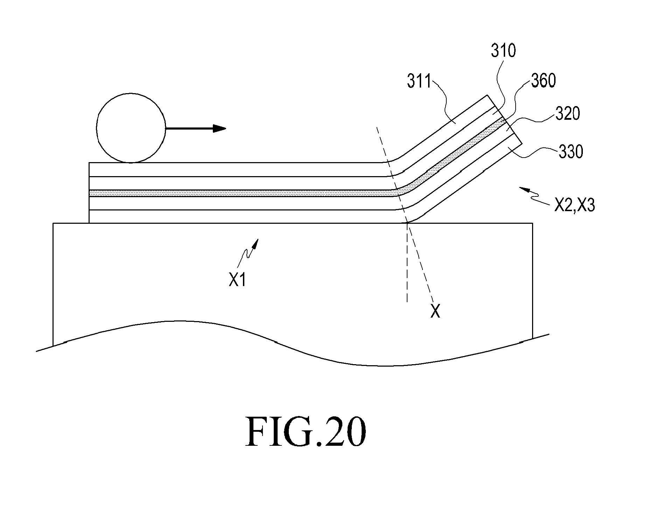

FIG. 20 is a view schematically illustrating a lamination process in a display device according to an embodiment of the present disclosure.

Referring to FIG. 20, as described above, in the display device 300 according to an embodiment of the present disclosure, when the screen unit 301 is disposed in a curved display unit 303 and a lamination process is performed on laminated panels, laminations may be performed using different conditions from each other on the flat first screen region X1 and the curved second screen region X2, respectively. That is, different pressure values and temperature values may be applied in panels of the flat first screen region X1 and panels the curved second screen region X2. For a first region (corresponds to the flat first screen region X1) of one side of the second screen region X2 with respect to the axis X between the first screen region X1 and the second screen region X2, a predetermined pressure value and a temperature value may be provided to attached to the panels laminated in a flat shape. On the other hand, for a second region (corresponds to the curved second screen region X2) of another side of the second screen region X2 with respect to the axis X between the first screen region X1 and the second screen region X2, a smaller pressure value than the pressure value provided in the first region and a higher temperature value than the temperature value provided in the first region may be provided. Thus, when the lamination process is performed on the laminated panels, a difference in adhesive strength between the first and second regions can be made to be less than a predetermined value or ratio.

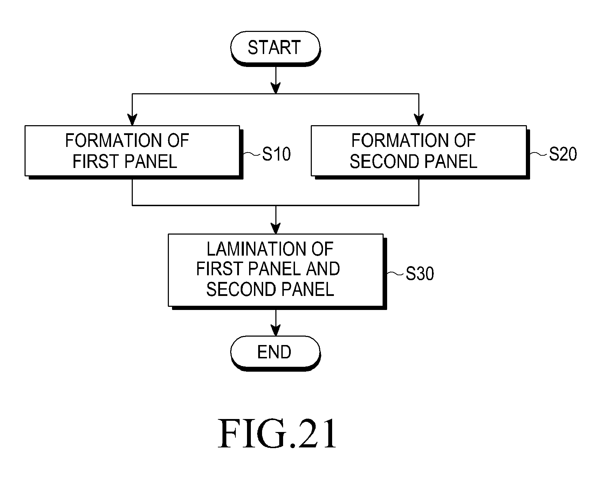

FIG. 21 is a flowchart of a lamination process in a display device according to an embodiment of the present disclosure.

A lamination process for panels of the display device 300 according to an embodiment of the present disclosure will be described with reference to FIG. 21.

A first panel may be formed by attaching polarization panel 311 and a display panel 310 in operation S10. Separately, a second panel may be formed by coupling the touch panel 320 to the window cover 330 after mounting the signal pattern on a transparent substrate member and performing a process for the touch panel 320 processing may be formed in operation S20.

Before the second panel is formed, the first non-transparent layer 351 may be included in an internal border of the window cover 330 so that at least one of border portions of the screen unit 301 is shielded.

To cover a visible region V1 which is visualized through a region facing the border portions of the second screen region X2 according to a viewing angle, the second non-transparent layer 352 may be disposed in at least one surface of the reinforcing member 321 laminated on an upper surface of the touch panel 320. Accordingly, the second panel may be formed by coupling the touch panel 320 in which the second non-transparent layer 352 is disposed in at least one surface of the second screen region X2 to the window cover 330 to which the first non-transparent layer 351 is disposed.

The display unit 303 may be processed by laminating the first panel and the second panel in operation S30.

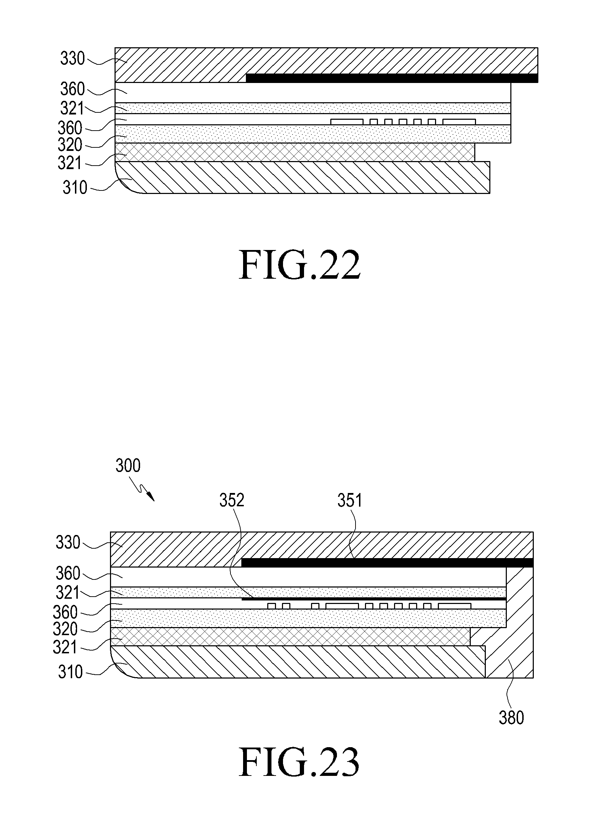

FIG. 22 is a view illustrating a cross-section of laminated panels in a display device according to an embodiment of the present disclosure.

FIG. 23 is a view illustrating a case in which a sealing member is disposed in end portions end portions of panels in a display device according to an embodiment of the present disclosure.

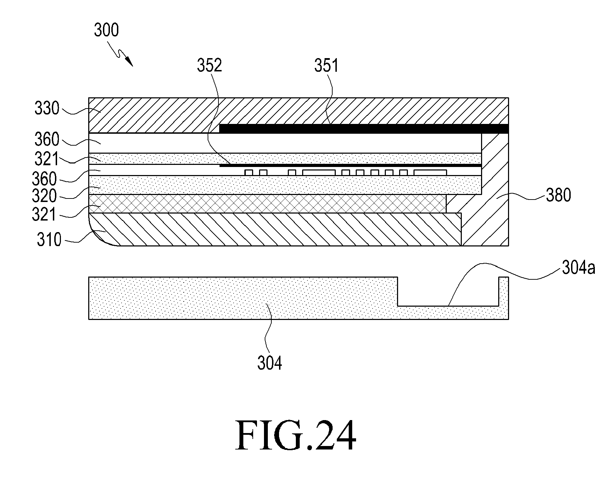

FIG. 24 is a view illustrating a case in which a display unit is coupled to a display bracket in a display device according to an embodiment of the present disclosure.

FIGS. 22 through 24 illustrate a configuration for preventing and sealing difference in level at end portions of the display unit 303 including the curved screen unit 301 according to an embodiment of the present disclosure. The second screen region X2 may be formed of a plurality of panels by bending border portions of flat panels such the first screen region X1. As described above, since the panels may have different materials and functions, tensile lengths when they are curved may be different from each other, and thus, panels at the end portions of the display unit 303 may have different tensile lengths from each other. According to an embodiment of the present disclosure, difference in level may be generated between respective end portions of adjacent panels due to difference in tensile length. The display unit 303 according to an embodiment of the present disclosure may include the sealing member 380 for compensating the difference in level occurring at the end portions of the panels and covering a lamination gap due to the difference in level between the panels. The sealing member 380 may be implemented using liquid member having water resistance or moisture resistance such as silicon, polyurethane, resin, etc., or a member including a film similar thereto. For example, if the sealing member 380 is liquid member, a liquid material application method including a brush, a roller, and a spray and a printing method including a mask may be used. If the sealing member 380 is a film member, a pressing method including a press and a roller may be used. However, a method of attaching the sealing member 380 is not limited thereto, and the method may include a processing method that can provide substantially the same effect.

According to an embodiment of the present disclosure, the sealing member 380 may restrict concentration of a stress due to shock absorption and shock to some panels. The difference in level between the panels may be reduced by disposing the sealing member 380 at the end portions of the display unit 303, or the end portions of the display unit 303 may form uniform end surfaces. Thus, if a shock such as a dropping is applied on the end portions of the display unit 303, an impact due to the shock may be distributed over a plurality of panels by the sealing member 380. That is, if there is difference in level, the impact of the shock may be concentrated on a panel of which an end portion relatively protrudes. However, since the difference in level is restricted by the sealing member 380, the concentration of the shock may be reduced by the sealing member 380, compared to the case in which the sealing member 380 is not applied.

According to an embodiment of the present disclosure, a sealing member 380 may restrict inflow of impurity (e.g., water) between the panels by sealing a lamination gap according to the difference in level at the end portions of the panels.

The sealing member 380 may be disposed at end portions of panels having difference in level to seal a lamination gap between adjacent panels. Accordingly, the lamination gap between adjacent panels laminated an upper surface of a panel, a lower surface thereof, or both upper and lower surfaces thereof may be blocked by the sealing member 380 and the inflow of impurity such as water between the panels may be prevented. For example, if water inflow occurs between the display panel 310 and the polarization panel 311, an image may not be displayed, or a malfunction may occur, and if water inflow occurs between a lamination gap of the touch panel 320, input/output operations may be implemented or a malfunction may occur. The sealing member 380 may prevent a malfunction, a damage, etc. due to impurity inflowing into end portions of the display device 300 by restricting the water inflow, and may increase reliability of the display unit 303 against the malfunction or the damage.

A plurality of laminated panels may be coupled to a display bracket 304 to be supported. An offset unit 304a may be disposed in the display bracket 304 to correspond a position of the sealing member 380. The offset unit 304a may be disposed in a groove shape in an internal portion of the display bracket 304. The offset unit 304a may reduce concentration of a shock which may occur due an overflow of the sealing member 380 when the display bracket 304 is mounted. If difference in level, which is cured while protruding, occurs at a lower surface of the display panel 310, a point or a surface which contacts the sealing member 380 and is cured while protruding may be avoided.

For example, in a case where the sealing member 380 includes liquid silicon, if the silicon is applied to the end portions of the laminated panels, some of the silicon, which is not cured, may overflow to a lower surface of the display panel 310. In this case, if the display panel 310 is coupled to the display bracket 304, the overflowing silicon may flow into an offset unit 304a to prevent ingress of the silicon between the display panel 310 and the display bracket 304. In addition, when the silicon is cured by being disposed to the end portions of the panels, some silicon may be cured more protrusively than a lower surface of the display panel 310. Thus, when the display panel 310 and the display bracket 304 are coupled to each other, the silicon which is cured while protruding from the end portions of the display panel 310 may prevent generation of a space by the difference in level between the display panel 310 and the display bracket 304 owing to the silicon's ingress to the offset unit 304a.

According to an embodiment of the present disclosure, a lower surface may include a directly adjacent lamination layer or an indirectly adjacent lamination layer. For example, the display device 300 may include at least one of the input/output panels 320 and 370, the window cover 330, the adhesive member 360 for coupling the panels, etc. Here, in a case where the input/output panel 320 is disposed below the window cover 330 and the display panel 310 is disposed therebelow, the input/output panel 320 may correspond to a directly adjacent lamination layer of the window cover 330 and the display panel 310 may correspond to a directly adjacent lamination layer of the window cover 330.

According to an embodiment of the present disclosure, a predetermined curvature may include one or more than two curvatures, or a continuous curvature. For example, a curvature radius R of 4 millimeters (mm) may include an arc of an sector with a radius of R=4 mm, or an arc of an sector with a radius of 3mm having radius of R=4mm which is a degree of being curved, curvature radiuses of R=3 mm and R=5 mm may include an arc of an sector of R=3mm and an arc of an sector of R=5 mm which are degrees of being curved, or a continuous curvature which ranged of R=1.1 mm to R=10.1 mm may include variation of curvatures which is a continuous value. The curvature radius value is not limited to the examples described above.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A display device comprising:
a screen display unit including a first screen region and a second screen region of which at least a portion is curved from the first screen region;
a first nontransparent layer disposed in at least one side of border portions of the screen display unit; and
a second nontransparent layer disposed in at least one side of border portions of the second screen region and separated from at least a portion of the first nontransparent layer in a direction perpendicular to the first nontransparent layer.

2. The display device of claim 1, wherein the screen display unit includes a screen region in which an image is displayed and a non-screen region in which the image is not displayed,
wherein the first nontransparent layer or the second nontransparent layer is disposed in the non-screen region.

3. The display device of claim 1, wherein the display device comprises:
a display panel;
a touch panel disposed on the display panel, wherein the touch panel includes a signal pattern disposed in the screen display unit and a connection line of the signal pattern, the connection line being disposed in the screen display unit; and
a window cover disposed on the touch panel,
wherein the first nontransparent layer is disposed on at least one surface of the window cover.

4. The display device of claim 3, wherein the second nontransparent layer is disposed on at least one surface of a reinforcing member disposed between the touch panel and the window cover.

5. The display device of claim 4, wherein the second nontransparent layer is disposed to cover at least a portion of the connection line.

6. The display device of claim 3, wherein the second nontransparent layer is disposed on a side of the touch panel.

7. The display device of claim 3, wherein the second nontransparent layer is disposed to block visible light reflecting from the connection line.

8. The display device of claim 3, wherein the display device further comprises a digitizer panel determining at least one input and a conductive sheet member attaching to a bottom portion of the digitizer panel,
wherein the conductive sheet member includes a first conductive sheet member corresponding to the first screen region and a second conductive sheet member corresponding to the second screen region, and
wherein a portion of the first conductive sheet member is formed of a first material, and a portion of the second conductive sheet member is formed of a second material.

9. The display device of claim 8, wherein the first conductive sheet member contacts the second conductive sheet member in a border of the first screen region and the second screen region.

10. The display device of claim 3, wherein the display device comprises a digitizer panel determining at least one input and a conductive sheet member attaching to a bottom portion of the digitizer panel,
wherein the conductive sheet member includes at least one slit unit in a region corresponding to the second screen region.

11. The display device of claim 3, wherein the display device further comprises a digitizer panel determining at least one input, a conductive sheet member attaching to a bottom portion of the digitizer panel, and a coupling member disposed between the digitizer panel and conductive sheet member to couple the digitizer panel and conductive sheet member with each other,
wherein the coupling member comprises a first coupling member corresponding to the first screen region and a second coupling member corresponding to the second screen region, and
wherein a portion of the first coupling member is formed of a first material, and a portion of the second coupling member is formed of a second material, and
wherein an adhesive strength of the second material is greater than an adhesive strength of the first material.

12. The display device of claim 3, wherein the display device further comprises a digitizer panel determining at least one input and a conductive sheet member attaching to a bottom portion of the digitizer panel,
wherein at least a portion of the digitizer panel is curved to correspond to the second screen region.

13. The display device of claim 12, wherein at least a portion of the display device is laminated to be coupled, and different pressure or temperature values are applied to the first screen region and the second screen region from each other during lamination, and
wherein a pressure value applied to the first screen region is greater than a pressure value applied to the second screen region, and a temperature value applied to the second screen region is greater than a pressure value applied to the first screen region.

14. The display device of claim 3, wherein at least one of sealing member is attached to a side of the display panel, a side of the touch panel, and a side of the window cover.

15. The display device of claim 14, wherein the display device further includes a display bracket supporting the display panel,
wherein the display bracket includes at least one offset unit.
